# EUROPÄISCHE PATENTSCHRIFT

(11) **EP 1 006 131 B1**
(45) Veröffentlichungstag und Bekanntmachung des Hinweises auf die Patenterteilung: **09.03.2005**
(21) Anmeldenummer: 99123175.4
(22) Anmeldetag: 23.11.1999
(51) Int. Cl.: C08G 18/10, C08G 18/83

(54) **Hybridlack-Zubereitungen**
Hybrid coating preparations
Préparations de revêtement hybride

(30) Priorität: 04.12.1998 DE 19856000
(43) Veröffentlichungstag der Anmeldung: 07.06.2000
(73) Patentinhaber: Bayer MaterialScience AG, 51368 Leverkusen (DE)
(72) Erfinder: Mechtel, Markus, Dr., 50937 Köln (DE); Groth, Stefan, Dr., 51373 Leverkusen (DE); Schmalstieg, Lutz, Dr., 50676 Köln (DE)

(56) Entgegenhaltungen:
- EP-A- 0 307 102
- EP-A- 0 353 551
- EP-A- 0 796 882
- WO-A-98/36007
- US-A- 4 640 868

## Beschreibung

Die vorliegende Erfindung betrifft Kondensationsprodukte von aliphatischen Polyisocyanat-Aminosilan-Addukten mit hydrolysierbaren Silanen, ein Verfahren zu deren Herstellung sowie deren Verwendung in Sol-Gel-Lacken.

Von der Lackindustrie werden für anspruchsvolle Beschichtungen, wie beispielsweise im Automobilbereich, Lacke gefordert, die in ihrem Eigenschaftsprofil eine ideale Kombination aus sehr guten mechanischen Eigenschaften, wie sehr hohe Härte und Abriebfestigkeit bei gleichzeitig hoher Flexibilität, mit sehr guten chemischen Eigenschaften, wie Lösemittel- und Chemikalienbeständigkeit, aufweisen.

Es ist bekannt, daß sich rein anorganische Beschichtungssysteme auf Siloxanbasis, die durch Umsetzung von hydrolysierbaren Silangruppen mit Wasser oder Wasser abspaltenden Mitteln hergestellt wurden, durch eine hohe Kratzfestigkeit und Chemikalienbeständigkeit auszeichnen. Ein allgemein bekanntes Verfahren zur Herstellung solcher rein anorganischen Beschichtungen ist der Sol-Gel-Prozeß, wie er von C. J. Brinker und W. Scherer in Sol-Gel Science: The Physics and Chemistry of Sol-Gel Processing", Academic Press, New York (1990) ausführlich beschrieben wird. Ein großer Nachteil der beschriebenen rein anorganischen Beschichtungen ist, daß sie spröde sind und zu Spannungsrissen neigen. Für flexible Substrate sind rein anorganische Beschichtungen daher nicht geeignet.

Aus der Literatur sind daher unterschiedliche Ansätze bekannt, die beschriebenen positiven Eigenschaften rein anorganischer Beschichtungen mit den Eigenschaften organischer Beschichtungen zu kombinieren. Eine Übersicht über die so genannten anorganisch-organischen Hybridlacke findet sich J. Mater. Chem. 6 (1996) 511. Konkrete Lösungsvorschläge finden sich in US-A 5378790, US-A 5344712, US-A 5316855, EP-A 565044, EP-A 505737 und in sind DE-A 40 20 316.

Kein dem Stand der Technik nach bekanntes Lacksystem erfüllt die von der Lackindustrie geforderte Eigenschaftskombination in vollem Umfang zufriedenstellend.

Aufgabe der Erfindung war es daher, ein Lacksystem bereitzustellen, das eine verbesserte Balance zwischen hoher Härte, Abriebfestigkeit sowie Chemikalienbeständigkeit einerseits und hoher Flexibilität andererseits aufweist.

Umsetzungsprodukte aus Aminosilanen mit Polyisocyanaten sind an sich bekannt (siehe z.B. Adhesives Age 5/1995, Seite 30 ff). Solche feuchtigkeitshärtenden, alkoxysilan-terminierten Polyurethane werden zunehmend in weichelastischen, bei Raumtemperatur härtenden Dichtungs- und Klebmassen eingesetzt (US-A 5700868, US-A 4625012, US-A 4474933, US-A 3979344, DE-A 4234325, DE-A 2155259). In keiner der bekannten Literaturstellen sind jedoch Kondensationsprodukte von aliphatischen Polyisocyanat-Aminosilan-Addukten mit hydrolysierbaren Silanen sowie deren Verwendung in Sol-Gel-Lacken beschrieben.

Überraschenderweise wurde nun gefunden, daß Kondensationsprodukte von aliphatischen Polyisocyanat-Aminosilan-Addukten mit hydrolysierbaren Silanen in Sol-Gel Lack-zubereitungen eine verbesserte Balance zwischen hoher Härte, Abriebfestigkeit sowie Chemikalienbeständigkeit einerseits und hoher Flexibilität andererseits aufweisen. Die Polyisocyanat-Aminosilan-Addukte reagieren mit den hydrolysierbaren Silanen über eine Polykondensation zu einer flexiblen anorganisch-organischen Hybridbeschichtung hoher Härte und sehr guter Lösemittelbeständigkeit.

Gegenstand der Erfindung sind Kondensationsprodukte von aliphatischen Polyisocyanat-Aminosilan-Addukten und hydrolysierbaren Silanen, die erhalten werden durch die Umsetzung von
A) 5 bis 80 Gew.-%, bevorzugt 20 bis 70 Gew.-% eines Addukts aus
   A1) einem aliphatischen Polyisocyanat(gemisch), das eine mittlere NCO-Funktionalität von 2,5 bis 5,5 und einen Isocyanatgehalt von 9 bis 50 Gew.-% aufweist,
      mit
   A2) mindestens 0,7 Äquivalenten Aminosilan der Formel (I)

      (RO)ₙY₃₋ₙSi-CH₂CH₂CH₂-NHZ (I),

      in welcher
      - R: für Methyl, Ethyl,
      - Y: für Methyl, Ethyl,
      - Z: für H, C₁ - C₁₂-Alkyl, CH₂CH₂CH₂- Si(OR)ₙY₃₋ₙ und
      - n: für die Zahl 1, 2 oder 3 steht
      und
      pro Isocyanat-Äquivalent
   A3) gegebenenfalls anderen gegenüber Isocyanat reaktiven Verbindungen mit
B) 20 bis 95 Gew.-%, bevorzugt 30 bis 80 Gew.-% mindestens eines Silans der Formel (II)

   QSi(OX)₃ (II),

   in welcher
   - X: für C₁- C₄ Alkyl
   und
   - Q: für H, C₁ bis C₈-Alkyl, Phenyl, Methoxy, Ethoxy, 3-Glycidyloxy-propyl, 3-Aminopropyl und Methacryloxypropyl
   oder aus diesen Silanen erhältlichen Hydrolysaten/Kondensaten
steht.

Die erfindungsgemäßen Kondensationsprodukte können auch als Hybrid-Lacke bezeichnet werden.

Gegenstand der Erfindung ist auch ein Verfahren zur Herstellung der erfindungsgemäßen Kondensationsprodukte, dadurch gekennzeichnet, daß Kondensationsprodukte von aliphatischen Polyisocyanat-Aminosilan-Addukten und hydrolysierbaren Silanen, die erhalten werden durch die Umsetzung von
A) 5 bis 80 Gew.-%, bevorzugt 20 bis 70 Gew.-% eines Addukts aus
   A1) einem aliphatischen Polyisocyanat(gemisch), das eine mittlere NCO-Funktionalität von 2,5 bis 5,5 und einen Isocyanatgehalt von 9 bis 50 Gew.-% aufweist,
      mit
   A2) mindestens 0,7 Äquivalenten Aminosilan der Formel (I)

      (RO)ₙY₃₋ₙSi-CH₂CH₂CH₂-NHZ (I),

      in welcher
      - R: für Methyl, Ethyl,
      - Y: für Methyl, Ethyl,
      - Z: für H, C₁ - C₁₂-Alkyl, CH₂CH₂CH₂- Si(OR)ₙY₃₋ₙ und
      - n: für die Zahl 1, 2 oder 3 steht
      und
      pro Isocyanat-Äquivalent
   A3) gegebenenfalls anderen gegenüber Isocyanat reaktiven Verbindungen mit
B) 20 bis 95 Gew.-%, bevorzugt 30 bis 80 Gew.-% mindestens eines Silans der Formel (II)

   QSi(OX)₃ (II),

   in welcher
   - X: für C₁ - C₄ Alkyl
   und
   - Q: für H, C₁ bis C₈-Alkyl, Phenyl, Methoxy, Ethoxy, 3-Glycidyloxypropyl, 3-Aminopropyl und Methacryloxypropyl steht
   oder aus diesen Silanen erhältlichen Hydrolysaten/Kondensaten,
umgesetzt werden.

Ein weiterer Gegenstand der Erfindung ist die Verwendung der erfindungsgemäßen Kondensationsprodukte als Lack-Zubereitung zur Beschichtung von Lacken, Kunststoffen, Granit, Marmor, Metall, Holz, Leder und Textilien.

Das erfindungsgemäß einsetzbare aliphatische Polyisocyanat(gemisch) weist eine mittlere NCO-Funktionalität von 2,5 bis 5,5, bevorzugt von 2,8 bis 5,0, besonders bevorzugt von 3,0 bis 4,5 auf Der NCO-Gehalt bezogen auf den Festkörper beträgt 9 bis 50 Gew.-%, bevorzugt 10 bis 30 Gew.-%, besonders bevorzugt 11 bis 25 Gew.-%. Der Gehalt an monomerem Diisocyanat im aliphatischen Polyisocyanat(gemisch) ist bevorzugt kleiner 10 Gew.-%, besonders bevorzugt kleiner 2 Gew.-%, ganz besonders bevorzugt kleiner 0,5 Gew.-%.

Es können beliebige aliphatische Polyisocyanat(gemische) verwendet werden, wie beispielsweise Biurete, Isocyanurate (Trimerisate), Iminooxadiazindione, Uretdione, Allophanate oder Adukte mit niedermolekularen mehrfunktionellen Alkoholen wie Trimethylolpropan, 1,6-Hexandiol, 1,5-Pentandiol, Diethylenglykol, Triethylenglykol, 2,2,4-Trimethyl-1,3-propandiol, Neopentylglykol bzw. deren Gemische verwendet werden. Solche Polyisocyanate und Adukte mit niedermolekularen mehrfunktionellen Alkoholen werden beispielsweise in J. prakt. Chem. 1994, *336*, 185-200 und Lackharze, Chemie, Eigenschaften und Anwendungen, Hrsg. D. Stoye, W. Freitag, Hanser Verlag, München, Wien 1996 beschrieben.

Besonders bevorzugt sind Isocyanurate (Trimerisate), die eine NCO-Funktionalität von 3,0 bis 4,5 und einen Monomerengehalt von < 2 Gew.-% aufweisen, und die beispielsweise nach einem Trimerisierungsverfahren analog EP 33 09 96 hergestellt werden.

Die Herstellung geeigneter aliphatischer Polyisocyanat(gemische) erfolgt durch Oligomerisierung monomerer Diisocyanate, wie es beispielsweise in J. prakt. Chem. 336 (1994) 185-200 beschrieben wird. Beispiele für zur Oligomerisierung verwendbare monomere Diisocyanate sind 1,4-Butandiisocyanat, 1,6-Hexandiisocyanat (HDI), 3-Isocyanatomethyl-3,3,5-trimethylcyclohexylisocyanat (Isophorondiisocyanat = IPDI), 2-Methyl-1,5-pentandiisocyanat, 2,2,4-Trimethylhexamethylendiisocyanat (TMDI), 1,12-Dodecandiisocyanat, Bis(isocyanatomethyl)norbornan und 4,4'-Diisocyanatocyclohexylmethan.

Zur besseren Handhabbarkeit können die Polyisocyanat(gemische) A1) mit bis zu 50 Gew.-% üblicher Lacklösemittel verdünnt werden. Als Lacklösemittel geeignet sind Lösungsmittel, die gegenüber NCO-Gruppen nicht reaktiv sind, beispielsweise Butylacetat, Ethylacetat, 1-Methoxy-2-propylacetat, Toluol, 2-Butanon, Xylol, 1,4-Dioxan N-Methylpyrrolidon, Dimethylacetamid, Dimethylformamid, Dimethylsulfoxid. Bevorzugt wird N-Methylpyrrolidon eingesetzt.

Die Polyisocyanate A1) werden mit mindestens 0,7 Äquivalenten, bevorzugt mindestens 0,8 Äquivalenten, besonders bevorzugt mindestens 0,9 Äquivalenten (bez. auf Isocyanat) eines Aminosilans A2) der Formel (I)

(RO)ₙY₍₃₋ₙ₎Si-CH₂CH₂CH₂NHZ (I),

in welcher
- R: für Methyl, Ethyl,
- Y: für Methyl, Ethyl,
- Z: für H, C₁-C₁₂-Alkyl, CH₂CH₂CH₂-Si(OR)ₙY₃₋ₙ und
- n: für die Zahl 1, 2 oder 3
steht,
umgesetzt.

Beipiele für verwendbare Aminosilane A2) sind 3-Aminopropyltrimethoxysilan, 3-Aminopropyltriethoxysilan, 1-Amino-2,2-dimethyl-4-methyldimethoxysilan, Bis(3-trimethoxysilylpropyl)amin, 3-Aminopropyl-methyldiethoxysilan, 3-(N-Methylamino)-propyl-trimethoxysilan. Bevorzugt einzusetzende Aminosilane sind 3-Aminopropyltrimethoxysilan und 3-Aminopropyltriethoxysilan. Selbstverständlich können auch Gemische verschiedener Aminosilane eingesetzt werden.

Die verbleibenden NCO-Äquivalente können gegebenfalls mit beliebigen gegenüber Isocyanat reaktiven Verbindungen A3) wie zum Beispiel aliphatischen und cycloaliphatischen C₁ bis C₈-Alkoholen und/oder aliphatischen oder cycloaliphatischen C₁ bis C₈-Aminen umgesetzt werden. Daneben können auch Blockierungsmittel wie Butanonoxim, 3,5-Dimethylpyrazol, Malonsäurediethylester, ε-Caprolactam eingesetzt werden. Ebenso ist es möglich die verbleibenden NCO-Äqualente mit den als Lackharze üblichen nieder- und höhermolekularen Polyhydroxylverbindungen wie Polyacrylaten, Potyethern, Polyestern oder Polycarbonaten (beschrieben z. B. in Lackharze, Chemie, Eigenschaften und Anwendungen, Hrsg. D. Stoye. W. Freitag, Hanser Verlag. München, Wien 1996 ) umzusetzen. Falls diese Polyole mitverwendet werden, wird die Umsetzung mit diesen Verbindungen bevorzugt vor der Reaktion mit dem Aminosilan durchgeführt.

Ganz besonders bevorzugt ist eine Ausführungsform. bei der keine Polyole mitverwendet werden sondern lediglich weniger als 5 Äquivalentprozente aller ursprünglichen Isocyanatgruppen mit dem als Lösemittel verwendeten niedermolekularen Monoalkoholen umgesetzt werden.

Als Komponente B) werden hydrolysierbare Silan(gemisch)e der Formel (II)

QSi(OX)₃ (II),

in welcher
- X: für C₁ - C₄ Alkyl
und
- Q: für H, C₁ bis C₈-Alkyl, Phenyl, Methoxy, Ethoxy, 3-Glycidyloxy-propyl, 3-Aminopropyl und Methacryloxypropyl stehen
oder aus den genannten Silanen erhältlichen Hydrolysaten/Kondensaten,
eingesetzt.

Bevorzugt wird Tetraethoxysilan oder ein daraus erhältliches Hydrolysat[Kondensat eingesetzt.

Unter Hydrolysat/Kondensat sind Verbindungen zu verstehen, die durch teilweise Hydrolyse mindestens eines Silans allgemeinen Formel (II), gegebenenfalls in einem mit Wasser mischbaren Lösemittel, bevorzugt in einem aliphatischen Alkohol durch Reaktion mit Wasser in Anwesenheit eines Katalysators entstehen. Selbstverständlich können neben den erfindungsgemäßen Silanen der allgemeinen Formel (II) auch weitere in der Silikonchemie bekannte hydrolysierbare Silane eingesetzt werden. Ebenso können auch Mischungen der genannten Silane erfindungsgemäß eingesetzt werden. Für die Herstellung der Hydrolysate/Kondensate ist es bevorzugt, wenn das Verhältnis von Wasser zu hydrolysierbaren Gruppen in den Silanen der allgemeinen Formel (II) im Bereich von 0,2 : 1 bis 0,7 : 1, bevorzugt 0,4 : 1 bis 0,6 : 1 liegt. Einzelheiten des Sol-Gel-Prozesses sind beispielsweise bei C. J. Brinker und W. Scherer in Sol-Gel Science: The Physics and Chemistry of Sol-Gel Processing. Academic Press, New York (1990) beschrieben.

Die Gewichtsangaben in der erfindungsgemäßen Lackzubereitung beziehen sich auf die Einwaage an Polyisocyanat-Aminosilan-Addukt A) und Silan B) ohne Berücksichtigung eventuell eingesetzter Lösemittel und/oder weiterer Zusatzstoffe.

Der erfindungsgemäßen Lack-Zubereitung können beliebige Lösungsmittel der aus der Lackchemie an sich bekannten Art zugesetzt sein. Bevorzugte Lösungsmittel sind aliphatische Alkohole wie beispielsweise Ethanol, i-Propanol, n-Propanol, n-Butanol, i-Butanol, sek-Butanol, tert-Butanol, Etheralkohole wie beispielsweise 1-Methoxy-2-propanol oder C₁ bis C₄-Glykolmonoalkylether. Es kann von Vorteil sein, dipolare Lösungsmittel wie N-Methylpyrrolidon, Dimethylacetamid, Dimethylformamid, Dimethylsulfoxid, Dioxan mitzuverwenden. Auch aromatische Lösungsmittel wie Toluol, Xylol können beispielsweise in Mischung mit Alkoholen verwendet werden. Weiterhin sind Ester und Etherester wie Ethylacetat, Butylacetat, Ethoxypropylacetat geeignet.

Ebenso können weitere in der Lackindustrie an sich bekannte Zusatzstoffe, wie anorganische Pigmente, organische Pigmente und/oder übliche Lackhilfsmittel wie Füllstoffe, Weichmacher, Katalysatoren, Inhibitoren, Haftmittel, Lackadditive und/oder Dispergierhilfsmittel zugesetzt werden.

Das erfindungsgemäße Verfahren zur Herstellung der erfindunmgsgemäßen Kondensationsprodukte kann wie folgt durchgeführt werden. Für die Herstellung des Polyisocyanat-Aminosilan-Adduktes A) sind verschiedene Verfahrensweisen denkbar. In einer bevorzugten Ausführungsform der Erfindung erfolgt die Herstellung nach folgendem Verfahren: Das Polyisocyanat(gemisch) A1 wird gegebenfalls mit einem Lösungsmittel verdünnt und bei Temperaturen zwischen bevorzugt 25 bis 30°C unter Kühlung zu dem in einem Lösungsmittel verdünnten Aminosilan A2 getropft. Es hat sich hierbei gezeigt, daß die Mitverwendung von Alkoholen und/oder dipolaren Lösungsmitteln zur Verhinderung von Ausfällungen und Kristallisation beiträgt. Werden Alkohole mitverwendet, werden sie bevorzugt zusammen mit der Aminkomponente A2 eingebracht. Das Polyisocyanat(gemisch) A1 wird vorzugsweise 30 bis 70%ig in gegenüber Isocyanaten nicht reaktiven Lösungsmittel(gemischen) eingesetzt. Besonders bevorzugt werden Lösemittel(gemische) verwendet, die 20 bis 100 Gew.-%, bevorzugt 40 bis 100 Gew.-% N-Methylpyrrolidon enthalten. Das Amin A2 wird vorzugsweise 10 bis 60%ig in Alkohol(-Mischungen) gelöst eingesetzt. die vorzugsweise 50 bis 100 Gew.-%, besonders bevorzugt 80 bis 100 Gew.-% alkoholische Lösungsmittel enthalten. Um einen evtl. störenden Aminüberschuß zu vermeiden, kann es von Vorteil sein, die Aminkomponente A2 unterstöchiometrisch einzusetzen. Nach der Reaktion wird das Silan B) sowie gegebenfalls weitere Zusatzstoffe zugegeben und gegebenfalls der Katalysator hinzugefügt.

Das Silan(gemisch) der allgemeinen Formel (II) kann als solches oder aber als durch Hydrolyse mit Wasser und Katalysator erhältliches Hydrolysat/Kondensat eingesetzt werden. Wird das Silan(gemisch) als solches eingesetzt, wird der erfindungsgemäßen Lack-Zubereitung 1 bis 25 Gew.-%, bevorzugt 2 bis 20 Gew.-% Wasser (bez. auf die Komponenten A und B, ohne Lösemittel und Zusatzstoffe), gegebenenfalls zusammen mit einem Hydrolysekatalysator zugesetzt. Als Hydrolysekatalysator geeignet sind alle in der Siliconechemie bekannten Kondensations-katalysatoren, wie z.B. in W. Noll, Chemie und Technologie der Silikone, Kap. 5.4, S. 179 ff, Verlag Chemie, Weinheim, 1968 beschrieben werden. Bevorzugt werden als Katalysator Säuren wie Salzsäure, Schwefelsäure, p-Toluolsulfonsäure, Trifluoressigsäure. Essigsäure, und Ameisensäure eingesetzt. Es können bis zu 2 %, bevorzugt 0,01 bis 0,3 % (bez. auf den Lackfestkörper) Säure verwendet werden. Bevorzugt wird das Silan(gemisch) als vorzugsweise saures Hydrolysat/Kondensat eingesetzt. In diesem Fall ist es Vorteilhaft, wenn das Wasser sowie der Katalysator der erfindungsgemäßen Lack-Zubereitung als Bestandteil des Hydrolysats/Kondensats zugesetzt werden.

Nach der Zugabe des Katalysators oder des Hydrolysats/Kondensats kann es vorteilhaft sein, wenn die erfindungsgemäße Mischung vor der Applikation einige Zeit. vorzugsweise bis zu 60 Minuten bei Raumtemperatur gerührt wird. Danach kann das üblicherweise 10 bis 40%ige Sol nach den üblichen Methoden wie Spritzen, Fluten, Rakeln oder Tauchen appliziert werden. Für spezielle Anwendungen kann eventuell auch der Einsatz eines Primers sinnvoll sein.

Die Topfzeit der beschichtungsfertigen Mischung beträgt, je nach Art und Menge des Katalysators und der eingesetzten Polyisocyanatmischung mindestens 1 Stunde

Die in der Regel 2 bis 30 µm starken Beschichtungen erreichen bereits nach 24 h bei Raumtemperatur einen ausreichenden Härtungsgrad. Für spezielle Anwendungen, beispielsweise im Automobilbereich, kann aber auch eine Härtung bei erhöhter Temperatur erfolgen.

Die mit der erfindungsgemäßen Lack-Zubereitung hergestellten Beschichtungen weisen ein verbessertes Verhältnis von Härte (Bleistifthärte größer 7H), Lösemittelbeständigkeit (0,0,0) auf und sind sehr flexibel. Beschichtete Stahl-Musterplatten (140 mm x 65 mm x 0,25 mm) können problemlos mehrmals bis zu einem Winkel von 90° geknickt und wieder gerade gebogen werden, ohne daß die Beschichtung beschädigt wird oder abplatzt.

Es können beliebige Substrate wie Kunststoffe (z.B. Polycarbonat, Polyamid, Polyester, ABS, Polystyrol, PPO-Polyamidblends, PPS), lackierte Oberflächen, Marmor, Granit, Metalle, Holz, Leder und Textilien mit der erfindungsgemäßen Lack-Zubereitung beschichtet werden.

### Beispiele

Die nachfolgenden %-Angaben beziehen sich auf das Gewicht.

Die erfindungsgemäßen Lackzubereitungen wurden in einer Naßschichtdicke von 120 µm auf entfette Glasplatten und Stahl-Musterplatten (140 mm × 65 mm × 0,25 mm) aufgerakelt, 30 Minuten bei Raumtemperatur abgelüftet und anschließend 30 Minuten bei 130°C eingebrannt.

### Prüfung auf Lösemittelbeständigkeit der Beschichtung:

Je ein mit einem Wattebausch gefülltes Pillengläschen wurde mit Xylol, Isopropanol bzw. Aceton gesättigt. Die Pillengläschen wurden mit der offen Seite auf die beschichtete Glasplatte gestellt, so daß das Lösemittel auf die Beschichtung einwirken konnte. Nach einer Einwirkzeit von fünf Minuten wurden die Pillengläschen entfernt. Die Beschichtung wurde visuell und durch Abtasten mit der Hand auf Veränderungen untersucht.

### Auswertung:

| | |
|---|---|
| 0 | unverändert, ohne Befund |
| 1 | Spur verändert (nur sichtbare Veränderung) |
| 2 | gering verändert (mit dem Fingernagel spürbare Erweichung feststellbar) |
| 3 | deutlich verändert ( mit dem Fingernagel starke Erweichung feststellbar) |
| 4 | stark verändert (mit dem Fingernagel bis zum Untergrund) |
| 5 | zerstört (ohne Fremdeinwirkung Beschichtungsoberfläche zerstört) |

### Prüfung auf Elastizität der Beschichtung (Biegetest)

Die beschichteten Prüfbleche wurden an einer Tischkante bis zu einem Winkel von 90 ° geknickt und anschließend wieder gerade gebogen. Es wurde visuell beurteilt, ob Risse entstanden sind beziehungsweise ob die Beschichtung abgeplatzt ist.

### Beispiel 1

21,7 g (0,098 mol) 3-Aminopropyltrimethoxysilan werden mit 21,7 g Ethanol verdünnt.

39.2 g (0,1 val) Desmodur® Z 4470 (70%ige Lieferform in Butylacetat, Handelprodukt der Bayer AG, Isocyanatgehalt 11,5 %, NCO-Funktionalität = 3,5) werden mit 15,7 g N-Methylpyrrolidon versetzt und bei 25-30°C unter Kühlung zu der Aminlösung getropft. Schließlich läßt man die Lösung bei Raumtemperatur stehen, bis die NCO-Bande im IR-Spektrum verschwunden ist. Das Umsetzungsprodukt fällt als lagerstabile, klare Lösung mit einem Festkörpergehalt von 50 % an.

### Beispiel 2

22,1 g (0,1 mol) 3-Aminopropyltrimethoxysilan werden mit 105,7 g Ethanol verdünnt.

19,6 g (0,1 val) Desmodur® N 3300 (100%ige Lieferform, Handelprodukt der Bayer AG, Isocyanatgehalt 21,5 %, NCO-Funktionalität = 3,5) werden mit 19.6 g N-Methylpyrrolidon versetzt und bei 25-30°C unter Kühlung zu der Aminlösung getropft. Schließlich läßt man die Lösung bei Raumtemperatur stehen, bis die NCO-Bande im IR-Spektrum verschwunden ist. Das Umsetzungsprodukt fällt als klare Lösung mit einem Festkörpergehalt von 25 % an.

### Beispiel 3

In einem Dreihalskolben mit Rührer, Innenthermometer, Rückflußkühler werden 114,4 g Tetraethoxysilan (0,55 mol), 140 g Ethanol und 20 g 0,1 normale *para*-Toluolsulfonsäure (ca. 1,1 mol H₂O) zusammengegeben und 24 h gerührt. Es findet eine exotherme Reaktion statt. Das klare Silanhydrolysat ist bei Raumtemperatur in einem geschlossenen Gebinde mindestens sechs Monate lagerstabil.

### Beispiel 4

75 g des Umseztungsproduktes aus Beispiel 1 werden unter Rühren mit 25 g Silanhydrolysat aus Beispiel 3 und 36 g Ethanol versetzt und 60 Minuten bei Raumtemperatur gerührt. Es entsteht eine klare Lösung mit einem Festkörpergehalt von 16 % und einer Topfzeit von 180 Minuten.

### Beispiel 5

75 g des Umseztungsproduktes aus Beispiel 2 werden unter Rühren mit 25 g Silanhydrolysat aus Beispiel 3 und 13,6 g Ethanol versetzt und 60 Minuten bei Raumtemperatur gerührt. Es entsteht eine klare Lösung mit einem Festkörpergehalt von 13 % und einer Topfzeit von 180 Minuten.

### Vergleichsbeispiele

### Beispiel 6

In einem Dreihalskolben mit Rührer, Innenthermometer. Rückflußkühler wird zu einer Lösung von 280 g Tetraethoxysilan (1,35 mol) und 120 g Methyltriethoxysilan (0,67 mol) in 430 g Ethanol 66,6 g 0,1 normale *para*-Toluolsulfonsäure (ca. 3,7 mol H₂O) gegeben und 24 Stunden gerührt. Es findet eine exotherme Reaktion statt während der ein klares Silanhydrolysat entsteht.

### Beispiel 7

30,5 g Silanhydrolysat aus Beispiel 3 werden unter Rühren mit 14,3 g n-Butanol und 5,2 g Desmophen® A 665 (65 %ig in Butylacetat/Xylol, Handelprodukt der Bayer AG) homogen vermischt und 60 Minuten bei Raumtemperatur gerührt. Es entsteht eine klare Lösung mit einem Festkörpergehalt von 14 %.

Die Eigenschaften der Beschichtungen aus den erfindungsgemäßen Beispielen 4 und 5 sowie aus den Vergleichsbeispielen 6 und 7 sind in Tabelle 1 zusammengefaßt:

**Tabelle 1**

| Beispiel | 4 erfindungsgemäß | 5 erfindungsgemäß | 6 Vergleichsbeispiel | 7 Vergleichsbeispiel |
|---|---|---|---|---|
| Filmoptik¹⁾ | klar, rißfrei | klar, rißfrei | klar, Risse | klar, rißfrei |
| Bleistifthärte²⁾ | >7H | >7H | >7H | 2H |
| Aceton | 0 | 0 | 0 | 4 |
| Isopropanol | 0 | 0 | 0 | 2 |
| Xylol | 0 | 0 | 0 | 0 |
| Biegetest³⁾ | o.B. | o.B. | starke Risse, Beschichtung größtenteils abgeplatzt | o.B. |

| | | | | |
|---|---|---|---|---|
| 1) visuell | | | | |
| 2) ASTM D 3363 | | | | |
| 3) visuell | | | | |

Die erfindungsgemäßen Sol-Gel-Beschichtungen gemäß Beispiel, 4 und 5 haben ein sehr gutes Verhältnis von mechanischen Eigenschaften, wie sehr hohe Härte bei gleichzeitig hoher Flexibilität zu sehr guten chemischen Eigenschaften, wie beispielsweise Lösemittelbeständigkeit.

Vergleichsbeispiel 6 als anorganischer Sol-Gel-Lack ist spröde, reißt beim Verbiegen des Substrates weiter und platzt größtenteils ab. Vergleichsbeispiel 7 als ein Acrylatmodifizierter Hybridlack hat eine deutlich geringere Härte und eine schlechtere Lösemittelbeständigkeit.

## Patentansprüche

1. Kondensationsprodukte von aliphatischen Polyisocyanat-Aminosilan-Addukten und hydrolysierbaren Silanen, hergestellt durch die Umsetzung von
A) 5 bis 80 Gew.-% eines Addukts aus
A1) einem aliphatischen Polyisocyanat(gemisch), das eine mittlere NCO-Funktionalität von 2,5 bis 5,5 und einen Isocyanatgehalt von 9 bis 50 Gew.-% aufweist,
mit
A2) mindestens 0,7 Äquivalenten Aminosilan der Formel (I)
(RO)ₙY₃₋ₙSi-CH₂CH₂CH₂NHZ (I),
in welcher
R für Methyl, Ethyl,
Y für Methyl, Ethyl,
Z für H, C₁ - C₁₂-Alkyl, CH₂CH₂CH₂- Si(OR)ₙY₃₋ₙ und
n für die Zahl 1, 2 oder 3 steht
und
pro Isocyanat-Äquivalent
A3) gegebenenfalls beliebigen anderen gegenüber Isocyanat reaktiven Verbindungen
mit
B) 20 bis 95 Gew.-%, bevorzugt 30 bis 80 Gew.-% mindestens eines Silans der allgemeinen Formel (II)
QSi(OX)₃ (II),
in welcher
X für C₁ - C₄ Alkyl
und
Q für H, C₁ bis C₈-Alkyl, Phenyl, Methoxy, Ethoxy, 3-Glycidyloxy-propyl, 3-Aminopropyl und Methacryloxypropyl
oder aus diesen Silanen erhältlichen Hydrolysaten/Kondensaten,
steht.

2. Kondensationsprodukte nach Anspruch 1 **dadurch gekennzeichnet, daß** die mittlere NCO-Funktionalität im aliphatischen Polyisocyanat(gemisch) A1) zwischen 3,0 bis 4,5 liegt.

3. Kondensationsprodukte nach Anspruch 1, **dadurch gekennzeichnet, daß** der Gehalt an Isocyanat-Gruppen im aliphatischen Polyisocyanat(gemisch) A1), bezogen auf den Festkörper. 10 bis 30 Gew.-% beträgt.

4. Kondensationsprodukte nach Anspruch 1, **dadurch gekennzeichnet, daß** der Gehalt an monomerem Diisocyanat im eingesetzten aliphatischen Polyisocyanat(gemisch) A1) kleiner 2 Gew.-%, ist.

5. Kondensationsprodukte nach Anspruch 1, wobei das Polyisocyanat(gemisch) A1 mit mindestens 0,9 Äquivalenten Amin A2 pro Isocyanat-Äquivalent umgesetzt wird.

6. Kondensationsprodukte nach Anspruch 1, wobei für A2) 3-Aminopropyltriethoxysilan oder 3-Aminopropyltrimethoxysilan mitverwendet wird.

7. Kondensationsprodukte nach Anspruch 1, **dadurch gekennzeichnet, daß** das Silan der allgemeinen Formel (II) Tetraethoxysilan oder ein daraus erhältliches Hydrolysat/Kondensat ist.

8. Verfahren zur Herstellung der Kondensationsprodukte nach Anspruch 1, **dadurch gekennzeichnet, daß** Kondensationsprodukte von aliphatischen Polyisocyanat-Aminosilan-Addukten und hydrolysierbaren Silanen, hergestellt durch die Umsetzung von
A) 5 bis 80 Gew.-% eines Addukts aus
A1) einem aliphatischen Polyisocyanat(gemisch). das eine mittlere NCO-Funktionalität von 2,5 bis 5,5 und einen Isocyanatgehalt von 9 bis 50 Gew.-% aufweist,
mit
A2) mindestens 0,7 Äquivalenten Aminosilan der Formel (I)
(RO)ₙY₃₋ₙSi-CH₂CH₂CH₂-NHZ (I),
in welcher
R für Methyl, Ethyl,
Y für Methyl, Ethyl,
Z für H, C₁ - C₁₂-Alkyl, CH₂CH₂CH₂- Si(OR)ₙY₃₋ₙ und
n für die Zahl 1, 2 oder 3 steht
und
pro Isocyanat-Äquivalent
A3) gegebenenfalls beliebigen anderen gegenüber Isocyanat reaktiven Verbindungen
mit
B) 20 bis 95 Gew.-%, bevorzugt 30 bis 80 Gew.-% mindestens eines Silans der allgemeinen Formel (II)
QSi(OX), (II),
in welcher
X für C₁ - C₄ Alkyl
und
Q für H, C₁ bis C₈-Alkyl, Phenyl, Methoxy, Ethoxy, 3-Glycidyloxy-propyl, 3-Aminopropyl und Methacryloxypropyl
oder aus diesen Silanen erhältlichenHydrolysaten/Kondensaten,
steht.

9. Lackzubereitungen enthaltend Kondensationsprodukte gemäß Ansprüchen 1 - 7.

10. Verwendung von Lackzubereitungen gemäß Anspruch 9 zur Beschichtung von Substraten.

11. Verwendung gemäß Anspruch 10, **dadurch gekennzeichnet, dass** es sich bei den Substraten um Lacke, Kunststoffe, Granit, Marmor, Metall, Holz, Leder oder Textilien handelt.

12. Substrate beschichtet mit Schichten erhältlich nach Applikation von Lackzubereitungen gemäß Anspruch 9.

## Claims

1. Condensation products of aliphatic polyisocyanate-aminosilane adducts and hydrolysable silanes, which are prepared by the reaction of
A) 5 to 80 wt % of an adduct from
A1) an aliphatic polyisocyanate (mixture), which has a mean NCO functionality of 2.5 to 5.5 and an isocyanate content of 9 to 50 wt %,
with
A2) at least 0.7 equivalents of aminosilane of formula (I)
(RO)ₙY₃₋ₙSi -CH₂CH₂CH₂-NHZ (I),
in which
R stands for methyl, ethyl,
Y for methyl, ethyl,
Z for H, C₁-C₁₂ alkyl, CH₂CH₂CH₂-Si(OR)ₙY₃₋ₙ and
n for the number 1, 2 or 3
and
per isocyanate equivalent
A3) optionally any other compounds reactive towards isocyanate
with
B) 20 to 95 wt %, preferably 30 to 80 wt %, of at least one silane of general formula (II)
QSi(OX)₃ (II),
in which
X stands for C₁ - C₄ alkyl
and
Q stands for H, C₁ to C₈ alkyl, phenyl, methoxy, ethoxy, 3-glycidyloxy-propyl, 3-aminopropyl and methacryloxypropyl
or hydrolysates/condensates obtainable from these silanes.

2. Condensation products according to claim 1, **characterised in that** the mean NCO functionality in the aliphatic polyisocyanate (mixture) A1) lies between 3.0 and 4.5.

3. Condensation products according to claim 1, **characterised in that** the content of isocyanate groups in the aliphatic polyisocyanate (mixture) A1), relative to the solids, amounts to 10 to 30 wt %.

4. Condensation products according to claim 1, **characterised in that** the content of monomeric diisocyanate in the aliphatic polyisocyanate (mixture) A1) used is less than 2 wt %.

5. Condensation products according to claim 1, in which the polyisocyanate (mixture) A1 is reacted with at least 0.9 equivalents of amine A2 per isocyanate equivalent.

6. Condensation products according to claim 1, in which 3-aminopropyltriethoxy silane or 3-aminopropyltrimethoxysilane is also used for A2).

7. Condensation products according to claim 1, **characterised in that** the silane of general formula (II) is tetraethoxysilane or a hydrolysate/condensate obtainable therefrom.

8. Process for preparing condensation products according to claim 1, **characterised in that** condensation products of aliphatic polyisocyanate-aminosilane adducts and hydrolysable silanes, which are prepared by the reaction of
A) 5 to 80 wt % of an adduct from
A1) an aliphatic polyisocyanate (mixture), which has a mean NCO functionality of 2.5 to 5.5 and an isocyanate content of 9 to 50 wt %,
with
A2) at least 0.7 equivalents of aminosilane of formula (I)
(RO)ₙY₃₋ₙSi -CH₂CH₂CH₂-NHZ (I),
in which
R stands for methyl, ethyl,
Y for methyl, ethyl,
Z for H, C₁-C₁₂ alkyl, CH₂CH₂CH₂-Si(OR)ₙY₃₋ₙ and
n for the number 1, 2 or 3
and
per isocyanate equivalent
A3) optionally any other compounds reactive towards isocyanate
with
B) 20 to 95 wt %, preferably 30 to 80 wt %, of at last one silane of general formula (II)
QSi(OX)₃ (II),
in which
X stands for C₁ - C₄ alkyl
and
Q stands for H, C₁ to C₈ alkyl, phenyl, methoxy, ethoxy, 3-glycidyloxy-propyl, 3-aminopropyl and methacryloxypropyl
or hydrolysates/condensates obtainable from these silanes.

9. Paint preparations containing condensation products according to claims 1 to 7.

10. Use of paint preparations according to claim 9 for the coating of substrates.

11. Use according to claim 10, **characterised in that** the substrates may be paints, plastics, granite, marble, metal, wood, leather or textiles.

12. Substrates coated with layers obtainable after application of paint preparations according to claim 9.

## Revendications

1. Produits de condensation d'adduits aliphatiques de polyisocyanate-aminosilane et de silanes hydrolysables qui sont obtenus par la réaction de
A) 5 à 80% en poids, de préférence 20 à 70% en poids d'un adduit
A1) d'un (mélange de) polyisocyanate(s) aliphatique(s) qui présente une fonctionnalité NCO moyenne de 2,5 à 5,5 et un taux d'isocyanate de 9 à 50% en poids
avec
A2) au moins 0,7 équivalent d'aminosilane de formule (I)
(RO)ₙY₃₋ₙSi-CH₂CH₂CH₂-NHZ (I),
dans laquelle
R désigne un radical méthyle ou éthyle,
Y désigne un radical méthyle ou éthyle,
Z désigne H, un radical alkyle C₁-C₁₂, CH₂CH₂CH₂- Si(OR)ₙY3-n et
n désigne un nombre 1, 2 ou 3
et
par équivalent isocyanate
A3) éventuellement, n'importe quels autres composés réactifs aux isocyanates
avec
B) 20 à 95% en poids, de préférence 30 à 80% en poids d'au moins un silane de formule (II)
QSi(OX)₃ (II)
dans laquelle
X désigne un radical alkyle C₁-C₄
et
Q désigne H, un radical alkyle C₁ à C₈, phényle, méthoxy, éthoxy, 3-glycidyloxy-propyle, 3-aminopropyle et méthacryloxypropyle
ou des hydrolysats/condensats obtenus à partir de ces silanes.

2. Produits de condensation selon la revendication 1, **caractérisés en ce que** la fonctionnalité NCO moyenne dans le (mélange de) polyisocyanate(s) aliphatique(s) A1) se situe entre 3,0 et 4,5.

3. Produits de condensation selon la revendication 1, **caractérisés en ce que** le taux de groupes polyisocyanate dans le (mélange de) polyisocyanate(s) aliphatique(s) A1), par rapport aux matières solides, est de l'ordre de 10 à 30% en poids.

4. Produits de condensation selon la revendication 1, **caractérisés en ce que** le taux de diisocyanates monomères dans le (mélange de) polyisocyanate(s) aliphatique(s) A1) utilisé est inférieur à 2 % en poids.

5. Produits de condensation selon la revendication 1, dans lesquels le (mélange de) polyisocyanate(s) A1 est mis en réaction avec au moins 0,9 équivalent d'amine A2 par équivalent isocyanate.

6. Produits de condensation selon la revendication 1, dans lesquels le 3-aminopropyltriéthoxysilane ou le 3-aminopropyltriméthoxysilane sont utilisés pour A2).

7. Produits de condensation selon la revendication 1, **caractérisés en ce que** le silane de formule générale (II) est un tétraéthoxysilane ou un hydrolysat/condensat obtenu à partir de celui-ci.

8. Procédé de préparation de produits de condensation selon la revendication 1, **caractérisé en ce que** des produits de condensation d'adduits aliphatiques de polyisocyanate-aminosilane et de silanes hydrolysables sont obtenus par la réaction de
A) 5 à 80% en poids d'un adduit de
A1) un (mélange de) polyisocyanate(s) aliphatique(s) qui présente une fonctionnalité NCO moyenne de 2,5 à 5,5 et un taux d'isocyanate de 9 à 50% en poids
avec
A2) au moins 0,7 équivalent d'aminosilane de formule (I)
(RO)ₙY₃₋ₙSi-CH₂CH₂CH₂-NHZ (I),
dans laquelle
R désigne un radical méthyle ou éthyle,
Y désigne un radical méthyle ou éthyle,
Z désigne H, un radical alkyle C₁-C₁₂, CH₂CH₂CH₂-Si(OR)ₙY3-n et
n désigne un nombre 1, 2 ou 3
et
par équivalent isocyanate
A3) éventuellement. n'importe quels autres composés réactifs aux isocyanates
avec
B) 20 à 95% en poids, de préférence 30 à 80% en poids d'au moins un silane de formule générale (II)
QSi(OX)₃ (II)
dans laquelle
X désigne un radical alkyle C₁-C₄
et
Q désigne H, un radical alkyle C₁ à C₈, phényle, méthoxy, èthoxy, 3-glycidyloxy-propyle, 3-aminopropyle et méthacryloxypropyle
ou des hydrolysats/condensats obtenus à partir de ces silanes.

9. Compositions de revêtement contenant des produits de condensation selon les revendications 1 à 7.

10. Utilisation de compositions de revêtement selon la revendication 9 pour le revêtement de substrats.

11. Utilisation selon la revendication 10, **caractérisée en ce que** les substrats sont des peintures, des plastiques, du granit, du marbre, du métal, du bois, du cuir ou des textiles.

12. Substrats revêtus avec des couches obtenues après l'application de compositions de revêtement selon la revendication 9.
